# EUROPÄISCHE PATENTSCHRIFT

(11) **EP 0 919 127 B1**
(45) Veröffentlichungstag und Bekanntmachung des Hinweises auf die Patenterteilung: **09.06.1999**
(21) Anmeldenummer: 98106904.0
(22) Anmeldetag: 16.04.1998
(51) Int. Cl.: A21C 1/06, B01F 7/08, A21C 1/10

(54) **Verfahren und Vorrichtung zur Herstellung von Teigprodukten**
Process and device for manufacturing dough
Procédé et dispositif pour la fabrication de pate

(43) Veröffentlichungstag der Anmeldung: 02.06.1999
(73) Patentinhaber: Lihotzky-Vaupel, Wolfram, 94557 Niederalteich (DE)
(72) Erfinder: Lihotzky-Vaupel, Wolfram, 94557 Niederalteich (DE)
(74) Vertreter: Wunderlich, Rainer, Dipl.-Ing.

(56) Entgegenhaltungen:
- DE-B- 1 156 032
- FR-A- 1 182 351
- FR-A- 2 618 643
- FR-A- 2 747 128
- GB-A- 880 182
- GB-A- 2 208 467
- US-A- 4 948 612
- US-A- 5 126 159

## Beschreibung

Die Erfindung betrifft ein Verfahren zur Herstellung von Teigprodukten gemäß dem Oberbegriff des Anspruchs 1 sowie eine Vorrichtung zur Herstellung von Teigprodukten gemäß dem Oberbegriff des Anspruchs 14.

In der EP 0 351 423 B1 ist ein gattungsgemäßes Verfahren zur Teigherstellung für Nudelteigwaren beschrieben, bei dem ein trockenes Mahlerzeugnis wie Mehl oder dergleichen in einem Vormischer mit Wasser befeuchtet wird, so daß das Mehl in einen feuchten, krümelartig losen Zustand gebracht wird. Dieses krümelartige Material wird über einen Trichter oder ein Fallrohr in eine Einzugsschnecke einer Kneteinrichtung geführt. Anschließend wir der Teig in einem kontinuierlichen Durchlaufverfahren in einer extruderartigen Vorrichtung gebildet, aus der er in eine nachfolgende Einrichtung zum Pressen und Formen übergeben wird.

Die Zuführung des Mehls im feuchten, krümelartigen und klebrigen Zustand ist durch das mögliche Anhaften im Einlauftrichter und aufgrund hygienischer Nachteile unbefriedigend. Ebenso ist die erforderliche Übergabe des Teiges nach dem Durchlaufverfahren der Teigherstellung in eine nachfolgende Preß- und Formeinrichtung im Sinne eines kontinuierlichen Verfahrensbetriebs nicht befriedigend.

Aus der FR-A-2 618 643 geht eine gattungsgemäße Vorrichtung hervor, welche zur Herstellung eines Brandteiges eingesetzt wird. Eine Mischung aus Mehl, Salz und Zucker sowie Fett wird über die Öffnung in einen Extruder mit zwei gleichsinnig drehenden Wellen eingeleitet. Über eine weitere Öffnung wird eine flüssige Phase bestehend aus Mehl, Salz und Zucker, Wasser sowie Fett ebenfalls in eine Zone A des Extruders eingeführt. Nach einer ersten Mischung in den Zonen A und B des Extruders erfolgt eine Erwärmung des Teiges auf 90°C bis 110°C. In den sich anschließenden Abschnitten D und E erfolgt eine Abkühlung auf etwa 60°C und anschließend eine erneute Zuführung einer Mischung aus Mehl, Wasser, Fett etc. über eine dritte Öffnung. Nach einer weiteren Abkühlung wird der Teig ausexrudiert.

In der US-A-4,948,612 ist eine Vorrichtung zur Herstellung eines Keks-ähnlichen Produktes erläutert. Dabei wird über eine erste Zuführvorrichtung Zucker in einen Doppelextruder mit zwei gleichsinnig drehenden Wellen eingeführt. Durch die Druck- und Scherkräfte in dem Extruder wird der Zucker aufgeschmolzen, wobei eine Temperatur von 90°C bis 135°C erreicht wird. Anschließend wird Wasser über eine Leitung sowie Mehl über eine zweite Zuführeinrichtung in den Extruder eingeleitet. Bis zum Austritt aus dem Extruder soll diese Masse auf einer Temperatur von 90°C bis 135°C gehalten werden.

Diese Vorrichtungen sind für eine Herstellung eines insbesondere in bezug auf höhere Temperaturen sehr empfindlichen Teiges mit Ausbildung eines Klebergerüstes nicht oder allenfalls nur sehr bedingt geeignet.

Der Erfindung liegt daher die **Aufgabe** zugrunde, ein Verfahren und eine Vorrichtung zur Teigwarenherstellung anzugeben, mit denen Teigwaren mit einem ausgebildeten Klebergerüst auf einfache und effiziente Weise hergestellt werden können.

Die Aufgabe wird erfindungsgemäß zum einen durch ein Verfahren mit den Merkmalen des Anspruchs 1 gelöst.

Bei dieser Verfahrensweise wird ein Manierzeugnis wie Mehl, Dunst oder Gries in trockener Form in den Extruder zugeführt oder eingespeist, wodurch gegenüber der Zufuhrung des schon befeuchteten Mehls, das dann krümelig ist oder Klumpen bildet, eine einfachere Dosierung unter hygienisch verbesserten Bedingungen mangels Feuchtigkeit oder Nässe in der Zuführung besteht. Die Einspeisung oder Dosierung kann daher mit hoher Dosiergenauigkeit und in einer kompakteren Speiseeinheit durchgeführt werden, wobei deren Reinigung vereinfacht wird. Das Verfahren kann mit einem Mahlerzeugnis aus Getreide und insbesondere mit Weizenmahlprodukten der kleberreichen Hartweizensorten durchgeführt werden, eignet sich aber auch für Mahlerzeugnisse aus Hülsenfrüchten wie Sojabohnen, wenn Klebergerüstbildner in ausreichendem Maße vorhanden sind oder zugegeben werden. Es können jedoch auch mehrere Trockenkomponenten oder Mischungen daraus zugeführt werden, welche beispielsweise Gemüsepulver oder Trockenei umfassen.

Die Flüssigkeit wird zu der Trockenkomponente bzw. dem Mahlgut oder Mehl auf ihrem Förderweg in die Knetzone zugeleitet. Das Mehl wird dann von der zulaufenden oder eingespritzten Flüssigkomponente, die üblicherweise Wasser ist, schnell und gleichmäßig befeuchtet, so daß anschließend die aus Mehl und Wasser bestehende Teigmasse geknetet werden kann. Es können aber auch andere oder zusätzliche Flüssigkomponenten, wie Flüssigei, gelöstes Gemüsepulver etc., zugeleitet werden.

Bei dem vorgeschlagenen Verfahren wird ein definiertes Luftvolumen in die Teigmasse durch einen unterfütternden Betrieb des Extruders eingearbeitet. wird in der Förderschneckenzone weniger Mahlerzeugnis eingespeist , als die Förderschnecke abfördern könnte, d. h. die mögliche Abförderleistung der Schnecke ist größer als die Einspeisung von Mehl. Dieser unterfütternde Betrieb kann im Zusammenwirken mit einer gesteuerten Mehldosierung und Mehleinspeisung und einer Drehzahlregulierung der Extruderschnecken erreicht werden. Durch Einarbeiten von Luft in die Teigmasse können lockere Teigwaren wie Nudeln nach Hausmacherart hergestellt werden, die auch für Personen bekömmlich sind, die einer Diät folgen müssen. Besonders vorteilhaft ist dies für die Herstellung von Instantnudeln, wobei das Blanchieren, Kochen oder Fritieren zeitlich verkürzt oder weggelassen werden kann. Für eine definierte Einstellung des Luftanteils, welcher auch nahezu null betragen kann, ist die komplette Zubereitung und Verarbeitung des Teiges in einem Extruder wesentlich.

Wenn gemäß einer vorteilhaften Verfahrensführung die Teigmasse mit Misch- und/oder Scherelementen zur gleichmäßigen Luftverteilung bearbeitet wird, kann eine besonders gleichmäßige, homogenisierte Luftverteilung in der Teigmasse erreicht werden, die der fertigen, getrockneten Teigware ein ansprechendes Aussehen mit gleichmäßigem stofflichen und optischen Erscheinungsbild verleiht.

Es kann vorgesehen werden, daß der Teigmasse während dem Fördern, dem Kneten, oder allgemein während dem Bearbeiten, weitere Trocken- oder Flüssigkomponenten als Zusatzstoffe zugeführt werden. Damit können z. B. in einer Förder- oder Bearbeitungszone des Extruders durch Öffnungen in einer Gehäusewand Flüssigei, Tomatenmark, Spinat, Farbstoffe, Salz und dergleichen zugeführt und insbesondere eingespritzt werden.

Das Kneten der Teigmasse dient in jedem Abschnitt des Herstellungsverfahrens einer Homogenisierung der Teigmasse und somit der Erhöhung der Produktqualität.

Zweckmäßigerweise kann der Teigmasse Luft unter Druck zugeführt oder unter Unterdruck oder Vakuum entzogen werden. Dadurch kann ein Anteil oder Teilvolumen der in der Teigmasse enthaltenen Luft oder anderer gasförmiger Stoffe beeinflußt werden, um somit ein definiertes Luftvolumen der Teigmasse vor der Fertigstellung des Teiges zu erzielen. Das Eindüsen oder Absaugen der Luft aus der Teigmasse erfolgt vorzugsweise in einer Be- oder Entgasungszone des Extruders und wird über eine Druckeinrichtung vorgenommen, die vorzugsweise an einer Dekompressionszone angeschlossen sein kann.

Gemäß einem vorteilhaften Verfahrensschritt wird in der Teigmasse durch eine definierte Druckeinstellung in der Misch- und Knetzone eine definierte Luftporosität hergestellt.

Bei dem erfindungsgemäßen Verfahren kann in der Teigmasse durch eine Rückmischung eine gleichmäßige Luftverteilung eingestellt werden. Dabei wird ein Teil der Teigmasse kurzzeitig gegen die Hauptförderrichtung bewegt, wodurch eine weitere Homogenisierung erreicht wird.

Zweckmäßigerweise wird eine gezielte Temperaturführung in den einzelnen Verfahrensschritten durch Wärmen und/oder Kühlen der Teigmasse vorgenommen. Somit kann in Abhängigkeit von der Temperatur der Roh- oder Ausgangsstoffe wie Mehl und Wasser, der Umgebungstemperatur und der bei der Teigherstellung entstehenden Wärme die Teigmasse auf der gewünschten Temperatur gehalten werden. Dabei wird die Temperatur der Teigmasse unter 50°C und bevorzugt auf 35°-40°C gehalten. Damit ist gewährleistet, daß eine Temperatur eingehalten wird, die sowohl zur mechanischen Bearbeitung der Teigmasse zweckmäßig ist und die auch zum Aufbau eines guten Klebergerüstes nicht überschritten werden darf.

Bei dem Verfahren wird die Teigmasse in einem Doppelwellenextruder mit zwei gegenlaufenden Extruderwellen gefördert und hergestellt. Damit kann sowohl eine ausreichende Förder- und Knetleistung als auch eine verbesserte Lufteinschlingung oder -einmengung in die Teigmasse erzielt werden.

Zweckmäßigerweise werden die Extruderwellen mit einer Drehzahl von etwa 50 U/min betrieben. Diese Drehzahl hat ein gutes Misch- und Knetergebnis zur Folge, ohne den Teig übermäßig zu erwärmen und damit zu schädigen. Von dieser Drehzahl kann in gewissem Umfang abgewichen werden, um beim unterfütternden Betrieb eine Drehzahlanpassung für eine exakt definierte Lufteinarbeitung zu erreichen.

Besonders vorteilhaft wird das Verfahren angewandt, wenn der Teig nach seiner Fertigbearbeitung beim Abführen aus dem Extruder unter Druck sofort in ein Teigprodukt geformt wird. Auf diese Weise wird ein geschlossener Verfahrensablauf von der Zuführung des Mahlgutes und der Flüssigkeit bis hin zum Abführen des Teiges in ein Formwerkzeug erzielt, der Vorteile unter hygienischen Gesichtspunkten und im Hinblick auf einen kontinuierlichen, ungestörten Betrieb aufweist.

Die obige Aufgabe wird erfindungsgemäß auch durch eine Vorrichtung mit den Merkmalen des Anspruchs 14 gelöst. Die Vorrichtung umfaßt ein Gehäuse mit zumindest einer angetriebenen Extruderwelle mit einer ersten Förderschneckenzone und zumindest einer Knetzone, eine Eintrittsöffnung für ein Mahlerzeugnis wie Getreidemehl als Trockenkomponente des Teiges, eine Befeuchtungseinrichtung zum Zuführen einer Flüssigkomponente zu dem trockenen Mahlerzeugnis im Bereich der ersten Förderschneckenzone, und eine Austrittsöffnung für den zubereiteten Teig . Da bei dieser Vorrichtung nur trockenes Mehl oder dergleichen durch die Eintrittsöffnung zugeführt wird, sind mangels Feuchtigkeit die hygienischen Bedingungen am Einlauf- oder Zuführtrichter verbessert. Außerdem läßt sich das trockene Mehl besser dosieren und zuführen als feuchtes, klumpiges Mehl, das an den Oberflachen des Einlauftrichters anhaften kann.

Bei der erfindungsgemäßen Vorrichtung erfolgt eine definierte Lufteinmengung in die Teigmasse durch einen unterfütternden Betrieb . Dabei wird die Zufuhr von trockenem Mehl oder einem derartigen Mahlerzeugnis durch den Trichter und die Drehzahl der Förderschnecken derart gesteuert, daß die Abförderleistung der Förderschnecken (d. h. der mögliche Volumenstrom) größer ist als die tatsächlich zugeführte Menge an Mahlprodukt.

Zweckmäßigerweise enthält die Extruderwelle eine Kompressionszone und eine Dekompressionszone, um durch wechselnde Drücke eine Vermischung und Knetung der Teigmasse zu unterstützen. Zusätzlich kann eine Absaugeinrichtung zum Absaugen von Luft aus dem Gehäuse und damit aus der Teigmasse im Bereich der Dekompressionszone vorgesehen sein. Damit kann der gewünschte Luftgehalt in der Teigmasse eingestellt werden.

Gemäß einer vorteilhaften Ausbildung der Extrudervorrichtung enthält die Extruderwelle eine sich an die Dekompressionszone anschließende Rückmischzone. In dieser Zone wird durch eine der Hauptförderrichtung entgegengesetzte kurzfristige Rückbewegung zumindest eines Teils der Teigmasse eine gleichmäßige Luftverteilung in der Teigmasse erzielt.

Zu diesem Zweck ist es vorteilhaft, daß die Extruderwelle im Bereich der Rückmischzone Rückmischelemente oder eine Förderschnecke aufweist, die eine Rückwärtssteigung mit Durchbrüchen für die Teigmasse aufweist.

Um die Flüssigkomponente des Teiges bzw. das Wasser zuzuführen, kann die Befeuchtungseinrichtung eine Flüssigkeitszuführung über das Gehäuse und oder über die Exzenterwelle aufweisen.

Dabei ist es zweckmäßig, wenn die Flüssigkeitszuführung Austrittsöffnungen zum drucklosen Einlaufen oder Austrittsdüsen zum Einspritzen der Flüssigkeit unter Druck aufweist.

Der Extrunder ist als Doppelwellenextruder mit zwei Extruderwellen für gegenläufigen Betrieb ausgebildet. Dabei wird im gegenläufigen Betrieb eine gute Lufteinmengung in die Teigmasse erzielt.

Die Extruderwellen können einstückig hergestellt sein oder wie das Gehäuse in Segmentbauweise aus einzelnen Funktionssegmenten für die unterschiedlichen Zonen zusammengesetzt sein.

Besonders vorteilhaft ist die erfindungsgemäße Vorrichtung einsetzbar, wenn am Ausgang des Extruders ein Formwerkzeug für den Teig angeordnet ist. Dann kann die Teigmasse direkt und unter Druck aus dem Extruder in das Formwerkzeug strömen, in dem die gewünschten Teigwarenformen erzeugt werden.

Zweckmäßigerweise ist das Formwerkzeug aus Messing oder Bronze hergestellt oder weist eine Teflonbeschichtung an den Formflächen auf, so daß eine reibungsmindernde und nahezu anhaftungsfreie Oberfläche besteht.

Die Vorrichtung kann eine Temperiereinrichtung enthalten, mit der durch Wärmezu- oder -abführung oder Kühlung in den einzelnen Abschnitten oder Zonen der Exzenterwelle eine Teigtemperatur von unter 50°C einstellbar ist. Bei einer optimierten Teigherstellung wird die Teigtemperatur auf etwa 35°-40°C gehalten.

Für eine optische, geschmackliche und strukturelle Teigverbesserung kann eine Zuführeinrichtung für Zusatzstoffe, die insbesondere an einer Förderzone angeordnet ist, vorgesehen sein, so daß beispielsweise Flüssigei, Tomatenmark, Spinat, Farbstoffe, zusätzlich Klebergerüstbildner, Wasser, Salz und weitere Stoffe zugeführt werden können.

Bei einem bevorzugten Ausführungsbeispiel weist jede Extruderwelle die folgenden sich aneinander anschließenden Zonen auf: eine Beschickungs- und erste Förderschneckenzone, eine erste Knetzone mit Knetwerkzeugen, eine zweite Förderschneckenzone, eine zweite Knetzone mit Knetwerkzeugen zum Homogenisieren des Teiges, eine dritte Förderschneckenzone, eine Verdichterzone, eine Dekompressionszone, eine Rückmischzone für eine Gegenförderbewegung, eine Knetzone für feine Luftverteilung, und eine vierte Förderschneckenzone.

Dabei kann die Verdichterzone durch eine Förderschnecke mit abnehmender Gangsteigung und/oder abnehmender Gangtiefe und die Dekompressionszone durch eine Förderschnecke mit zunehmender Gangsteigung und/oder zunehmender Gangtiefe gebildet sein.

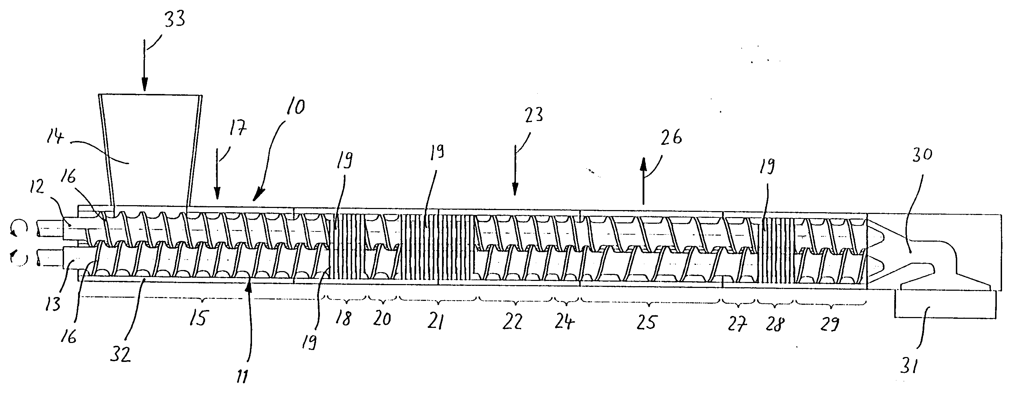

Nachfolgend wird die Erfindung anhand eines Ausführungsbeispiels einer erfindungsgemäßen Vorrichtung unter Bezugnahme auf eine Zeichnung näher erläutert, wobei die Figur in einer Schnittansicht eine Extrudervorrichtung mit einer Doppelschnecke zeigt. Die dargestellte Vorrichtung weist einen Extruder 10 mit einer Doppelwelle oder Doppelschnecke 11 auf, die von zwei parallelen Wellen oder Schnecken 12, 13 gebildet ist, die in einem Extrudergehäuse 32 angeordnet sind und gegenläufig über einen Antrieb (nicht dargestellt) drehzahlreguliert angetrieben werden können. Die beiden Wellen 12, 13 können untereinander oder in einer horizontalen Ebene nebeneinander angeordnet sein, so daß die Figur dementsprechend als Seitenansicht oder als Draufsicht anzusehen ist.

Die Vorrichtung enthält eine Speise- oder Zuführeinrichtung 14 wie z. B. einen Trichter, mit dem eine Trockenkomponente der Teigmasse zu der Doppelschnecke 11 in eine erste Zone 15 dosiert zugeführt wird (symbolische Darstellung durch Pfeil 33, der Trichter ist bei Betrachtung der Figur als Draufsicht um 90° versetzt dargestellt). Die Trockenkomponente ist bei üblichen Teigwaren ein Getreide-Mahlerzeugnis wie Mehl, Dunst oder Grieß, die sich im wesentlichen in ihrer Mahlfeinheit unterscheiden. Die Zuführeinrichtung 14 kann als ein Trichter mit einer Dosiereinrichtung gebildet sein, wie beispielsweise ein Schieber oder eine einstellbare Blende (nicht dargestellt). In dieser ersten Förderzone 15 weist jede Extruderwelle 12, 13 eine Förderschnecke 16 mit im wesentlichen konstanter Steigung auf und bildet somit eine erste Beschickungs- und Förderstrecke für die zugeführte Trockenkomponente bzw. das Mehl. Die Drehzahl der Förderschnecke und damit die Fördergeschwindigkeit und die Förderleistung ist zusammen mit der Dosiereinrichtung derart aufeinander einstellbar, daß dem geförderten Mehlvolumen in dieser Zone durch einen unterfütternden Betrieb eine definierte Luftmenge zugeführt wird.

In dieser Förderzone 15 wird beispielsweise Wasser als eine Flüssigkomponente des Teiges zu dem trockenen Mehl zugeführt (symbolische Darstellung durch Pfeil 17). Das befeuchtete Mehl wird durch die beiden Schnecken zu einer Teigmasse gemischt, wobei das in den Schneckengängen enthaltene Luftvolumen in die Teigmasse eingearbeitet wird. Das Wasser wird über Düsen in der Gehäusewand eingespritzt, die beispielsweise etwa ringförmig anschließend an den Trichter angeordnet sind (nicht dargestellt). Alternativ oder zusätzlich kann das Wasser über axiale Kanäle in den Exzenterwellen 12, 13 und über eine oder mehrere, axial und/oder radial verteilte Austrittsöffnungen oder Austrittsdüsen zum Mehl hin ausfließen oder dorthin eingespritzt werden. Zum Erzielen einer gewünschten Teigtemperatur kann das Wasser auf eine erforderliche Temperatur erwärmt oder gekühlt sein.

Anschließend an die Förderzone 15 weist der Extruder eine Knetzone 18 auf, in der die Extruderwellen 12, 13 Knetwerkzeuge 19, z. B. Knetscheiben oder Knetfinger, aufweisen, die ineinander greifen und bei Rotation die Teigmasse durchkneten. Eine sich anschließende und Förderschnecken aufweisende Förderzone 20 dient dem Transport der Teigmasse in eine zweite Knetzone 21 mit Knetwerkzeugen 19, in der die Teigmasse beim Knetvorgang homogenisiert wird, so daß die in der Teigmasse enthaltene Luft gleichmäßig verteilt enthalten ist. In der sich anschließenden Förderschneckenzone 22 können über Gehäuseöffnungen Zusatzstoffe zugeführt oder mit Druck beaufschlagte Luft eingedüst (symbolisch mit Pfeil 23 dargestellt) und untergemischt werden. Solche Zusatzstoffe sind beispielsweise Flüssigei, Tomatenmark, Spinat, Farbstoffe, Salz und ähnliche Färbe-, Struktur- und Geschmacksstoffe.

In einer Verdichter- oder Kompressionszone 24 wird die Teigmasse nach Zugabe der Zusatzstoffe verdichtet. Dazu können die Extruderschnecken eine verringerte Schneckengangsteigung und/oder eine abnehmende Gangtiefe aufweisen. Daraufhin folgt eine Dekompressionszone 25, die beispielsweise von Extruderschnecken mit vergrößerter Schneckengangsteigung und/oder zunehmender Gangtiefe gebildet ist. In der Dekompressionszone 25 ist am Gehäuse eine Absaugeinrichtung angeschlossen, über die ein Teil der in der Teigmasse enthaltenen Luft oder anderer gasförmiger Stoffe wieder entfernt werden kann. Das Absaugen, beispielsweise über eine angeschlossene Vakuumkammer, ist symbolisch mit dem Pfeil 26 dargestellt. Durch das Absaugen eines definierten Luftvolumens kann der verbleibende Luftanteil in der Teigmasse eingestellt werden.

In einer sich anschließenden Rückmischzone 27 weisen die Extruderwellen Rückmischelemente oder rückwärts wirkende Schneckenabschnitte mit Durchbrechungen (nicht dargestellt) zum Durchtritt der Teigmasse bei ihrer Vorwärts-Transportbewegung auf. In der Rückmischzone 27 erfolgt eine besonders innige Durchmengung der Teigmasse, die zu einer gleichmäßigen Luftverteilung in der Teigmasse führt.

Schließlich folgt noch eine Knetzone 28 mit Knetwerkzeugen 19 zum Erzeugen einer feinen Luftverteilung für eine feinporige Teigmasse.

In einer letzten Förderzone 29 wird die fertiggestellte Teigmasse mittels Förderschnecken in einen Austragskanal 30 gefördert und von dort unter Preßdruck der Förderschnecken direkt in ein an den Extruder angeschlossenes Formwerkzeug 31 gedrückt, um Teigwaren wie Nudeln oder Spaghetti und dergleichen zu formen.

Zur Temperierung der Teigmasse in dem Extruder können in oder an den die Extruderwellen umgebenden Gehäusewänden Heiz- und/oder Kühlelemente oder -kanäle angeordnet sein, die in einzelnen Segmenten über die Länge des Extruders bedarfsweise eine Heiz- bzw. Kühlwirkung auf die Teigmasse ausüben können. Damit kann die Teigmasse in einem für die Teigherstellung bevorzugten Temperaturbereich gehalten werden.

Die Extruderwellen können entsprechend der unterschiedlichen Zonen aus einzelnen Segmenten zusammengesetzt sein, indem z. B. die einzelnen Schneckenelemente oder Knetwerkzeuge, die eine zentrale Öffnung aufweisen, auf einer stabförmigen Exzenterwelle aufgeschoben und daran gegen Verdrehen gesichert sind.

Das Formwerkzeug kann entweder gänzlich aus Teflon hergestellt sein oder zumindest teflonbeschichtete Oberflächen an den Formöffnungen für die Teigmasse aufweisen.

Die Bauteile des Extruders, wie die Förder- oder Kompressionsschnecken oder die Knetwerkzeuge, sowie auch das Gehäuse des Extruders können aus einem lebensmittelverträglichen Metall, insbesondere Edelstahl hergestellt oder damit beschichtet sein.
Neben der genannten Einarbeitung von Umgebungsluft kann auch ein spezielles Schutz- oder Zubereitungsgas, etwa einem Antioxidationsgas, verwendet werden, wodurch eine noch hygienischere und schonendere Teigwarenherstellung möglich ist. Insbesondere kann der gesamte Arbeitsraum des Extruders einschließlich der Trockenstoffzuführung unter einer gewünschten Gasatmosphäre mit einem gewissen Überdruck stehen, so daß ein Eindringen von Keimen in den Arbeitsraum erschwert ist.

## Patentansprüche

1. Verfahren zur Herstellung von Teigprodukten mit einem ausgebildeten Klebergerüst, bei dem zumindest ein pulverförmiger Teiggrundstoff wie Mehl, Dunst, Gries oder eine im wesentlichen daraus bestehende Mischung, als Trockenkomponente mit einer Flüssigkomponente gemischt, die daraus gebildete Teigmasse mittels eines Extruders geknetet und ein fertiger Teig zu den Teigprodukten geformt wird, wobei zur Ausbildung des Klebergerüstes die Temperatur der Teigmasse während der Verfahrensdurchführung unter 50°C gehalten wird,
dadurch **gekennzeichnet,**
- daß der Extruder zwei Extruderwellen (12, 13) aufweist, die gegenläufig drehend betrieben werden,
- daß die Trockenkomponente direkt in eine erste Förderschneckenzone (15) des gegenläufigen Extruders zugeführt wird,
- daß die Flüssigkomponente getrennt von der Trockenkomponente in die erste Förderschneckenzone (15) des gegenläufigen Extruders eingeleitet wird,
- daß der gegenläufige Extruder in der ersten Förderschneckenzone (15) unterfütternd betrieben wird, wobei die Trockenkomponente und die Flüssigkomponente unter definierter Beimengung eines Gases zu einer Teigmasse vermischt werden,
- daß innerhalb des gegenläufigen Extruders die Teigmasse geknetet sowie der fertige Teig gebildet wird und
- daß bei einem Austritt aus dem Extruder der Teig unter Druck in eine gewünschte Form des Teigproduktes gepreßt wird.

2. Verfahren nach Anspruch 1 ,
dadurch **gekennzeichnet**,
daß ein definiertes Gasvolumen der Teigmasse zugeführt und in diese eingearbeitet wird, wobei als Gas Umgebungsluft oder ein spezielles Schutz- oder Zubereitungsgas, wie Sauerstoff, Stickstoff, Kohlendioxid etc., verwendet werden kann.

3. Verfahren nach Anspruch 1 oder 2,
dadurch **gekennzeichnet**,
daß die Teigmasse mit Misch- und/oder Scherelementen zur gleichmäßigen Gasverteilung bearbeitet wird.

4. Verfahren nach einem der Ansprüche 1 bis 3,
dadurch **gekennzeichnet**,
daß in den Extruder, insbesondere während dem Fördern, Kneten oder Bearbeiten, weitere Trockenkomponenten und/oder Flüssigkomponenten zugeführt werden.

5. Verfahren nach einem der Ansprüche 1 bis 4,
dadurch **gekennzeichnet**,
daß die Teigmasse auf einer Knetstrecke homogenisiert wird.

6. Verfahren nach einem der Ansprüche 1 bis 5,
dadurch **gekennzeichnet**,
daß der Teigmasse in dem Extruder definiert Gas unter Druck zugeführt wird.

7. Verfahren nach einem der Ansprüche 1 bis 6,
dadurch **gekennzeichnet**,
daß der Teigmasse auf einer Entgasungszone des Extruders Gas entzogen wird.

8. Verfahren nach einem der Ansprüche 1 bis 7,
dadurch **gekennzeichnet**,
daß in der Teigmasse durch eine einstellbare Druckeinstellung in der Misch- und Knetzone eine definierte Gasporosität herstellbar ist.

9. Verfahren nach einem der Ansprüche 1 bis 8,
dadurch **gekennzeichnet**,
daß eine gleichmäßige Gasverteilung in der Teigmasse durch eine Rückmischzone einstellbar ist.

10. Verfahren nach einem der Ansprüche 1 bis 9,
dadurch **gekennzeichnet**,
daß eine gezielte Temperaturführung in den einzelnen Verfahrensschritten durch Wärmen und/oder Kühlen der Teigmasse vorgenommen wird, wobei die Temperaturführung insbesondere über das Gehäuse und/oder die Extruderwelle erfolgt.

11. Verfahren nach einem der Ansprüche 1 bis 10,
dadurch **gekennzeichnet**,
daß die Temperatur der Teigmasse unter auf 35°-40°C gehalten wird.

12. Verfahren nach Anspruch 1,
dadurch **gekennzeichnet**,
daß die Extruderwellen (12, 13) mit einer Drehzahl von etwa 50 U/min betrieben werden.

13. Verfahren nach einem der Ansprüche 1 bis 12,
dadurch **gekennzeichnet**,
daß der Teig nach seiner Fertigbearbeitung beim Abführen aus dem Extruder unter Druck durch ein Formwerkzeug gepreßt und mit einem Schneidwerkzeug abgelängt wird.

14. Vorrichtung zur Herstellung von Teigprodukten, insbesondere zur Durchführung des Verfahrens nach einem der Ansprüche 1 bis 15, mit einem Extruder, an dessen Austrittsöffnung (30) ein zubereiteter Teig unter Druck in eine gewünschte Form des Teigproduktes bringbar ist, dadurch **gekennzeichnet,**
- daß in einem Gehäuse (32) zwei gegenläufig angetriebene Extruderwellen (12, 13) mit einer ersten Förderschneckenzone (15) und zumindest einer Knetzone (18) angeordnet sind,
- daß eine Eintrittsöffnung (14) mit einer Dosiereinrichtung für ein oder mehrere pulverförmige Trockenkomponenten des Teiges vorgesehen ist,
- daß eine Befeuchtungseinrichtung (17) zum Zuführen einer oder mehrerer Flüssigkomponenten zu der oder den Trockenkomponenten im Bereich der ersten Förderschneckenzone (15) vorgesehen ist, und
- daß die Drehzahl der Extruderwellen (12, 13) im Zusammenwirken mit der Zuführung der Trockenkomponente durch die Dosierungseinrichtung gesteuert und auf einen unterfütternden Betrieb in der ersten Förderschneckenzone (15) eingestellt ist, bei dem eine Förderleistung in der ersten Förderschneckenzone (15) größer als die Zuführung der Trockenkomponente sowie eine definierte Gaseinmengung gegeben ist.

15. Vorrichtung nach Anspruch 14,
dadurch **gekennzeichnet**,
daß die Extruderwelle (12, 13) eine Kompressionszone (24) und eine Dekompressionszone (25) aufweist, an der eine Absaugeinrichtung (26) zum Absaugen von Gas aus der Teigmasse bzw. dem Gehäuse (32) angeschlossen ist.

16. Vorrichtung nach Anspruch 14 oder 15,
dadurch **gekennzeichnet**,
daß die Extruderwelle (12, 13) eine sich an die Dekompressionszone (25) anschließende Rückmischzone (27) aufweist.

17. Vorrichtung nach einem der Ansprüche 14 bis 16,
dadurch **gekennzeichnet**,
daß die Extruderwelle (12, 13) im Bereich der Rückmischzone (27) Rückmischelemente oder eine Förderschnecke aufweist, die eine Rückwärtssteigung mit Durchbrüchen für die Teigmasse aufweist.

18. Vorrichtung nach einem der Ansprüche 14 bis 17,
dadurch **gekennzeichnet**,
daß die Befeuchtungseinrichtung (17) eine Flüssigkeitszuführung über das Gehäuse und/oder über die Extruderwelle (12, 13) aufweist.

19. Vorrichtung nach Anspruch 18,
dadurch **gekennzeichnet**,
daß die Flüssigkeitszuführung (17) Austrittsöffnungen oder Austrittsdüsen aufweist.

20. Vorrichtung nach einem der Ansprüche 14 bis 19,
dadurch **gekennzeichnet**,
daß eine Gaseindüsungseinrichtung für eine definierte Gaseinmegung in die Teigmasse vorgesehen ist.

21. Vorrichtung nach einem der Ansprüche 14 bis 20,
dadurch **gekennzeichnet**,
daß die Extruderwelle (12, 13) und das Gehäuse (32) aus einem zur Lebensmittelverarbeitung geeigneten Metall, insbesondere Edelstahl, hergestellt sind.

22. Vorrichtung nach einem der Ansprüche 14 bis 21,
dadurch **gekennzeichnet**,
daß das Gehäuse (32) des Extruders (10) und/oder die Ertruderwelle (12, 13) in Segmentbauweise aus einzelnen Funktionssegmenten für die unterschiedlichen Zonen zusammengesetzt sind.

23. Vorrichtung nach einem der Ansprüche 14 bis 22,
dadurch **gekennzeichnet**,
daß am Ausgang (30) des Extruders (10) ein Formwerkzeug (31) zum Formen von Teigwaren angeordnet ist.

24. Vorrichtung nach Anspruch 23,
dadurch **gekennzeichnet**,
daß das Formwerkzeug (31) aus Messing oder Bronze besteht und/oder eine Teflonbeschichtung aufweist.

25. Vorrichtung nach einem der Ansprüche 14 bis 24,
dadurch **gekennzeichnet**,
daß eine Temperiereinrichtung vorgesehen ist, mit der durch Wärmezu- oder -abführung oder Kühlung in den einzelnen Abschnitten an der Exzenterwelle (12, 13) eine Teigtemperatur von unter 50°C einstellbar ist.

26. Vorrichtung nach einem der Ansprüche 14 bis 25,
dadurch **gekennzeichnet**,
daß jede Extruderwelle (12, 13) die folgenden sich aneinander anschließenden Zonen aufweist:
eine Beschickungs- und erste Förderschneckenzone (15),
eine erste Knetzone (18) mit Knetwerkzeugen (19),
eine zweite Förderschneckenzone (20),
eine zweite Knetzone (21) mit Knetwerkzeugen (19) zum Homogenisieren des Teiges,
eine dritte Förderschneckenzone (22),
eine Verdichterzone (24),
eine Dekompressionszone (25),
eine Rückmischzone (27) für eine Gegenförderbewegung,
eine Knetzone (28) für feine Luftverteilung, und
eine vierte oder letzte Förderschneckenzone (29).

27. Vorrichtung nach Anspruch 26,
dadurch **gekennzeichnet**,
daß die Verdichterzone (24) durch eine Förderschnecke mit abnehmender Gangsteigung und die Dekompressionszone (25) durch eine Förderschnecke mit zunehmender Gangsteigung gebildet ist.

## Claims

1. Method for the production of paste products having a formed gluten framework, in which at least one powdery dough base like flour, dust, semolina or a mixture consisting essentially of these is mixed as a dry component with a liquid component, the dough mass being formed therefrom is kneaded by means of an extruder and a finished dough is formed into paste products, wherein the temperature of the dough mass for the formation of the gluten framework is kept below 50 °C during carrying out of the method,
**characterized** in that,
- the extruder comprises two extruder shafts (12, 13), which are driven in counter-rotation,
- the dry component is fed directly into a first screw conveyor zone (15) of the counter-rotating extruder,
- the liquid component is introduced separately from the dry component into the first screw conveyor zone (15) of the counter-rotating extruder,
- the counter-rotating extruder in the first screw conveyor zone (15) is driven below its feeding capacity, wherein the dry component and the liquid component are mixed to a dough mass with a defined admixture of a gas,
- within the counter-rotating extruder the dough mass is kneaded and the finished dough is formed, and
- at an outlet of the extruder the dough is pressed under pressure into a desired form of the paste product.

2. Method according to claim 1
**characterized** in that,
a defined volume of gas is fed into the dough mass and is worked into the said dough mass, wherein ambient air or a special protective gas or preparation gas such as oxygen, nitrogen, carbon-dioxide, etc. may be used as a gas.

3. Method according to claim 1 or 2,
**characterized** in that,
the dough mass is processed using mixing elements and / or shearing elements for the uniform distribution of the gas.

4. Method according to any of the claims 1 to 3,
**characterized** in that,
into the extruder, especially during the conveying, kneading or processing additional dry components and/or liquid components are fed.

5. Method according to any of the claims 1 to 4
**characterized** in that,
the dough mass is homogenised on a kneading section.

6. Method according to any of the claims 1 to 5
**characterized** in that,
into the dough mass in the extruder is introduced gas under pressure in defined manner.

7. Method according to any of the claims 1 to 6
**characterized** in that,
from the dough mass is extracted gas on a gas extraction zone of the extruder.

8. Method according to any of the claims 1 to 7
**characterized** in that,
a defined gas porosity can be produced in the dough mass through an adjustable pressure control in the mixing and kneading zone.

9. Method according to any of the claims 1 to 8
**characterized** in that,
a uniform distribution of gas in the dough mass can be set through a reverse mixing zone.

10. Method according to any of the claims 1 to 9
**characterized** in that,
a specific regulation of temperature, in the individual steps of processing through heating and/or cooling of the dough mass is carried out, wherein the regulation of the temperature especially is accomplished through the casing and/or the extruder shaft.

11. Method according to any of the claims 1 to 10
**characterized** in that,
the temperature of the dough mass is kept to 35 to 40 °C.

12. Method according to claim 1
**characterized** in that,
the extruder shafts (12, 13) have a rotational speed of approximately 50 revolutions per minute.

13. Method according to any of the claims 1 to 12
**characterized** in that,
after being finished and when discharged from the extruder the dough is pressed under pressure through a form tool and is parted off with a cutting tool.

14. Device for the production of paste products, in particular for carrying out of the method according to any of the claims 1 to 15, having an extruder, at the outlet (30) of which prepared dough can be transformed under pressure into a desired form of the paste product,
**characterized** in that,
- in a casing (32) are arranged two counter-rotating driven extruder shafts (12, 13) having a first screw conveyor zone (15) and at least one kneading zone (18),
- an inlet opening (14) is provided having a dosing mechanism for one or a plurality of powdery dry components of the dough,
- a moisturising mechanism (17) is provided for the feeding of one or a plurality of liquid components to the dry component(s) in the region of the first screw conveyor zone (15), and
- the rotational speed of the extruder shafts (12, 13) is controlled in cooperation with the feeding of the dry component by the dosing mechanism and is set below its feeding capacity in the first screw conveyor zone (15), in which a conveyance output in the first screw conveyor zone (15) is greater than the feeding of the dry component and a defined admixing of gas is effected.

15. Device according to claim 14
**characterized** in that,
the extruder shaft (12, 13) comprises a compression zone (24) and a decompression zone (25), to which is connected a suction mechanism (26) for extracting gas from the dough mass, respectively the casing (32).

16. Device according to claim 14 or 15
**characterized** in that,
the extruder shaft (12, 13) comprises a reverse mixing zone (27) connected to the decompression zone (25).

17. Device according to any of the claims 14 to 16
**characterized** in that,
the extruder shaft (12, 13) comprises reverse mixing elements or a screw conveyor in the region of the reverse mixing zone (27), which has a reverse pitch having openings for the dough mass.

18. Device according to any of the claims 14 to 17
**characterized** in that,
the moisturising mechanism (17) comprises a liquid feed system through the casing and/or through the extruder shaft (12, 13).

19. Device according to claim 18
**characterized** in that,
the liquid feed system (17) comprises outlet openings or outlet nozzles.

20. Device according to any of the claims 14 to 19
**characterized** in that,
a gas inlet nozzle device is provided for admixing a metered amount of gas into the dough mass.

21. Device according to any of the claims 14 to 20
**characterized** in that,
the extruder shaft (12, 13) and the casing (32) are manufactured from a metal suitable for food processing, in particular stainless steel.

22. Device according to any of the claims 14 to 21
**characterized** in that,
the casing (32) of the extruder (10) and/or the extruder shaft (12, 13) have a segment construction assembled from individual functional segments for the different zones.

23. Device according to any of the claims 14 to 22
**characterized** in that,
a form tool (31) for forming of paste products is arranged at the outlet (30) of the extruder (10).

24. Device according to claim 23
**characterized** in that,
the form tool (31) made of brass or bronze and/or comprises a Teflon coating.

25. Device according to any of the claims 14 to 24
**characterized** in that,
a tempering mechanism is provided with which a dough temperature can be set below 50 °C by supplying or extracting heat or cooling in the individual sections at the eccentric shaft (12, 13).

26. Device according to any of the claims 14 to 25
**characterized** in that,
each extruder shaft (12, 13) has the following successively adjoining zones:
a loading and first screw conveyor zone (15),
a first kneading zone (18) having kneading tools (19),
a second screw conveyor zone (20),
a second kneading zone (21) having kneading tools (19) for homogenising the dough,
a third screw conveyor zone (22),
a compression zone (24),
a decompression zone (25),
a reverse mixing zone (27) for a counter-conveying motion,
a kneading zone (28) for fine distribution of air, and
a fourth or final screw conveyor zone (29).

27. Device according to claim 26
**characterized** in that,
the compression zone (24) is formed by a screw conveyor having a reducing screw pitch and the decompression zone (25) is formed by a screw conveyor having an increasing screw pitch.

## Revendications

1. Procédé de fabrication de pâtes alimentaires avec, formé, un réseau de gluten, dans lequel au moins un constituant de base pulvérulent de la pâle comme de la farine, de la farine fleur, de la semoule ou un mélange se composant pour l'essentiel de ceux-ci, est mélangé en tant que composante sèche à une composante liquide, la masse pâteuse ainsi formée est malaxée au moyen d'une extrudeuse et une pâte terminée est façonnée à la forme des pâles alimentaires, la température de la masse pâteuse pendant la conduite du procédé étant maintenue au-dessous de 50°C pour la formation du réseau de gluten,
***caractérisé en ce que*** l'extrudeuse comporte deux arbres (12, 13) d'extrudeuse qui tournent en sens inverse,
***en ce que*** la composante sèche est introduite directement dans une première zone de vis de convoyage (15) de l'extrudeuse tournant en sens inverse,
***en ce que*** la composante liquide est introduite séparément de la composante liquide dans la première zone de vis de convoyage (15) de l'extrudeuse tournant en sens inverse,
***en ce que*** l'extrudeuse tournant en sens inverse est entraînée en sous-alimentation dans la première zone de vis de convoyage (15), la composante sèche et la composante liquide étant mélangées, avec ajout défini d'un gaz, pour former une masse pâteuse,
***en ce qu***'à l'intérieur de l'extrudeuse tournant en sens inverse, la masse pâteuse est malaxée et la pâte terminée est formée, et
***en ce qu***'au niveau d'une sortie de l'extrudeuse, la pâte est pressée à la forme souhaitée des pâtes alimentaires sous pression.

2. Procédé selon la Revendication 1, ***caractérisé en ce qu***'un volume de gaz défini est introduit dans la masse pâteuse et intégré à celle-ci, le gaz employé pouvant être l'air ambiant ou un gaz protecteur ou de préparation spécial, comme de l'oxygène, de l'azote, du dioxyde de carbone, etc.

3. Procédé selon la Revendication 1 ou 2, ***caractérisé en ce que*** la masse pâteuse est travaillée avec des éléments de mélange et/ou de cisaillement afin d'obtenir une répartition régulière du gaz.

4. Procédé selon l'une quelconque des Revendications 1 à 3, ***caractérisé en ce que***, dans l'extrudeuse, en particulier pendant le convoyage, le malaxage ou le travail, d'autres composantes sèches et/ou composantes liquides sont ajoutées.

5. Procédé selon l'une quelconque des Revendications 1 à 4, ***caractérisé en ce que*** la masse pâteuse est homogénéisée sur une ligne de malaxage.

6. Procédé selon l'une quelconque des Revendications 1 à 5, ***caractérisé en ce qu***'il est ajouté à la masse pâteuse dans l'extrudeuse un gaz défini sous pression.

7. Procédé selon l'une quelconque des Revendications 1 à 6, ***caractérisé en ce que*** du gaz est retiré de la masse pâteuse sur une zone de dégazage de l'extrudeuse.

8. Procédé selon l'une quelconque des Revendications 1 à 7, ***caractérisé en ce qu***'une porosité gazeuse définie peut être établie dans la masse pâteuse par un réglage de pression réglable dans la zone de mélange et de malaxage.

9. Procédé selon l'une quelconque des Revendications 1 à 8, ***caractérisé en ce qu***'une répartition régulière du gaz dans la masse pâteuse peut être établie à travers une zone de mélange arrière.

10. Procédé selon l'une quelconque des Revendications 1 à 9, ***caractérisé en ce qu***'une régulation ciblée de la température aux différentes étapes du procédé est effectuée par chauffage et/ou refroidissement de la masse pâteuse, la régulation de température se faisant en particulier par l' intermédiaire du boîtier et/ou de l'arbre de l'extrudeuse.

11. Procédé selon l'une quelconque des Revendications 1 à 10, ***caractérisé en ce que*** la température de la masse pâteuse est maintenue à 35-40°C.

12. Procédé selon la Revendication 1, ***caractérisé en ce que*** les arbres (12, 13) de l'extrudeuse sont entraînés à une vitesse d'environ 50 trs/min.

13. Procédé selon l'une quelconque des Revendications 1 à 12, ***caractérisé en ce que***, une fois terminée, la pâte est pressée à travers un outil de formage lors de sa sortie de l'extrudeuse et est coupée en longueur par un outil coupant.

14. Dispositif de fabrication de pâtes alimentaires, en particulier pour appliquer le procédé selon l'une quelconque des Revendications 1 à 15, avec une extrudeuse, au niveau de l'ouverture de sortie (30) de laquelle une pâte préparée peut être mise sous pression à une forme souhaitée des pâtes alimentaires, ***caractérisé en ce que***
dans un boîtier (32) sont placés deux arbres (12, 13) d'extrudeuse tournant en sens inverse avec une première zone de vis de convoyage (15) et au moins une zone de malaxage (18),
***en ce qu'***une ouverture d'entrée (14) avec un dispositif de dosage pour une ou plusieurs composantes sèches de la pâte est prévue,
***en ce qu***'un dispositif d'humidification (17) pour introduire une ou plusieurs composantes liquides dans la ou les composantes sèches est prévu au niveau de la première zone de vis de convoyage (15), et
***en ce que*** la vitesse de rotation des arbres ( 12, 13) d'extrudeuse est commandée par le dispositif de dosage en coopération avec l'introduction de la composante sèche et est réglée en mode de sous-alimentation dans la première zone de vis de convoyage (15), une puissance de convoyage dans la première zone de vis de convoyage (15) supérieure à l'alimentation de la composante sèche ainsi qu'une introduction de gaz définie étant présentes.

15. Dispositif selon la Revendication 14, ***caractérisé en ce que*** l'arbre ( 12, 13) de l'extrudeuse présente une zone de compression (24) et une zone de décompression (25), à laquelle est raccordé un dispositif d'aspiration (26) destiné à aspirer du gaz depuis la masse pâteuse ou du boîtier (32).

16. Dispositif selon la Revendication 14 ou 15, ***caractérisé en ce que*** l'arbre (12, 13) de l'extrudeuse présente une zone de mélange arrière (27) faisant suite à la zone de décompression (25).

17. Dispositif selon l'une quelconque des Revendications 14 à 16, ***caractérisé en ce que*** l'arbre (12, 13) de l'extrudeuse présente au niveau de la zone de mélange arrière (27) des éléments de mélange arrière ou une vis de convoyage, qui présente une pente vers l'arrière avec des traversées pour la masse pâteuse.

18. Dispositif selon l'une quelconque des Revendications 14 à 17, ***caractérisé en ce que*** le dispositif d'humidification (17) présente une introduction de liquide par l'intermédiaire du boîtier et/ou de l'arbre (12, 13) de l'extrudeuse.

19. Dispositif selon la Revendication 18, ***caractérisé en ce que*** l'alimentation de liquide (17) présente des ouvertures de sortie ou buses de sortie.

20. Dispositif selon l'une quelconque des Revendications 14 à 19, ***caractérisé en ce qu***'un dispositif d'injection de gaz pour une introduction définie de gaz dans la masse pâteuse est prévu.

21. Dispositif selon l'une quelconque des Revendications 14 à 20, ***caractérisé en ce que*** l'arbre (12, 13) de l'extrudeuse et le boîtier (32) sont fabriqués à partir d'un métal adapté au traitement des aliments, en particulier un acier spécial.

22. Dispositif selon l'une quelconque des Revendications 14 à 21, ***caractérisé en ce que*** le boîtier (32) de l'extrudeuse (10) et/ou l'arbre (12, 13) de l'extrudeuse se compose(nt) de différents segments fonctionnels pour les différentes zones.

23. Dispositif selon l'une quelconque des Revendications 14 à 22, ***caractérisé en ce qu***'à la sortie (30) de l'extrudeuse (10) est placé un outil de formage (31) pour former des pâtes alimentaires.

24. Dispositif selon la Revendication 23, ***caractérisé en ce que*** l'outil de formage (31) se compose de laiton ou de bronze et/ou présente un revêtement Téflon.

25. Dispositif selon l'une quelconque des Revendications 14 à 24, ***caractérisé en ce qu***'il est prévu un dispositif de maintien de température avec lequel, par apport ou retrait de chaleur ou par refroidissement dans les différentes sections sur l'arbre d'excentrique (12, 13), une température de pâte de moins de 50°C peut être maintenue.

26. Dispositif selon l'une quelconque des Revendications 14 à 25, ***caractérisé en ce que*** chaque arbre (12, 13) de l'extrudeuse présente les différentes zones consécutives suivantes :
une zone de chargement et première zone de vis de convoyage (15).
une première zone de malaxage (18) avec des outils de malaxage (19),
une deuxième zone de vis de convoyage (20),
une deuxième zone de malaxage (21) avec des outils de malaxage (19) pour homogénéiser la pâte,
une troisième zone de vis de convoyage (22),
une zone de compression (24),
une zone de décompression (25) ,
une zone de mélange arrière (27) pour un mouvement de convoyage inverse,
une zone de malaxage (28) pour une distribution fine de l'air, et
une quatrième ou dernière zone de vis de convoyage (29).

27. Dispositif selon la Revendication 26, ***caractérisé en ce que*** la zone de compression (24) est formée par une vis de convoyage à inclinaison de spire décroissante et la zone de décompression (25) par une vis de convoyage à inclinaison de spire croissante.
